**Europäisches Patentamt**

**European Patent Office**

**Office européen des brevets**

(19)

(11) **EP 1 229 099 A2**

(12) **EUROPÄISCHE PATENTANMELDUNG**

(43) Veröffentlichungstag:
 07.08.2002 Patentblatt 2002/32

(51) Int Cl.⁷: **C09K 11/80**

(21) Anmeldenummer: **02100092.2**

(22) Anmeldetag: **31.01.2002**

(84) Benannte Vertragsstaaten:
 **AT BE CH CY DE DK ES FI FR GB GR IE IT LI LU MC NL PT SE TR**
 Benannte Erstreckungsstaaten:
 **AL LT LV MK RO SI**

(30) Priorität: **01.02.2001 DE 10104364**

(71) Anmelder:
 • **Philips Corporate Intellectual Property GmbH**
  **52064 Aachen (DE)**
  Benannte Vertragsstaaten:
  **DE**
 • **Koninklijke Philips Electronics N.V.**
  **5621 BA Eindhoven (NL)**
  Benannte Vertragsstaaten:
  **FR GB**

(72) Erfinder:
 • **Jüstel, Thomas, Dr.**
  **52066 Aachen (DE)**
 • **Bechtel, Helmut, Dr.**
  **52066 Aachen (DE)**
 • **Mayr, Walter,**
  **52066 Aachen (DE)**

(74) Vertreter: **Volmer, Georg, Dipl.-Ing. et al**
 **Philips Corporate Intellectual Property GmbH,**
 **Habsburgerallee 11**
 **52064 Aachen (DE)**

(54) **Plasmabildschirm mit einer Leuchtstoffschicht**

(57) Die Erfindung betrifft einen Plasmabildschirm ausgerüstet mit einer Leuchtstoffschicht (9), die einen intrinsisch pigmentierten Leuchtstoff enthält. Der Plasmabildschirm weist einen verbesserten Wert für die Luminanz-Kontrast-Performance auf, ohne dass die Effizienz der Leuchtstoffe herabgesetzt wird.

FIG. 1

EP 1 229 099 A2

**Beschreibung**

Die Erfindung betrifft einen Plasmabildschirm ausgerüstet mit einer Leuchtstoffschicht. Desweiteren betrifft die Erfindung einen Leuchtschirm ausgerüstet mit einer Leuchtstoffschicht, eine Leuchtstoffzubereitung und einen Leuchtstoff.

Plasmabildschirme ermöglichen Farbbilder mit hoher Auflösung, großer Bildschirmdiagonale und sind von kompakter Bauweise. Ein Plasmabildschirm weist eine hermetisch abgeschlossene Glaszelle, die mit einem Gas gefüllt ist, mit gitterförmig angeordneten Elektroden auf. Durch Anlegen einer elektrischen Spannung wird eine Gasentladung hervorgerufen, die Licht im ultravioletten Bereich erzeugt. Durch Leuchtstoffe kann dieses Licht in sichtbares Licht umgewandelt und durch die Frontplatte der Glaszelle zum Betrachter emittiert werden.

Für ausreichenden Bildkontrast bei Tageslicht ist es wichtig, dass der Plasmabildschirm eine hohe Luminanz bei möglichst geringer Reflexion von externem Licht aufweist. Die Kenngröße dieser Eigenschaft ist die sogenannte Luminance Contrast Performance (LCP):

$$LCP = \frac{Luminanz\ (L)}{\sqrt{Reflexion\ (R)}}$$

Eine Erhöhung des Kontrastes und somit eine Verbesserung des LCP-Wertes kann zum Beispiel durch Pigmentierung der Leuchtstoffe mit anorganischen Pigmente erreicht werden. Die anorganischen Pigmente werden so ausgewählt, dass sie für die vom jeweiligen Leuchtstoff emittierte Farbe möglichst transparent sind und die restlichen Spektralanteile absorbieren.

Aus der JP 11-131059 ist ein Leuchtstoff für Plasmabildschirme beschrieben, der analog wie die Leuchtstoffe für Kathodenstrahlröhren mit einem anorganischen Pigment pigmentiert ist. Da die zur Anregung von Leuchtstoffen in Plasmabildschirmen verwendete VUV-Strahlung nur eine geringe Eindringtiefe in die Leuchtstoffpartikel hat, senkt eine Pigmentierung der Leuchtstoffpartikel deren Effizienz deutlich.

Es ist deshalb eine Aufgabe der vorliegenden Erfindung die Nachteile des Standes der Technik zu umgehen und einen verbesserten Plasmabildschirm bereitzustellen.

Diese Aufgabe wird gelöst, durch einen Plasmabildschirm ausgerüstet mit einer Leuchtstoffschicht, die einen Leuchtstoff enthält, der intrinsisch pigmentiert ist.

Vorteilhaft ist hier, dass die Pigmentierung des Leuchtstoffes nicht extern durch Aufbringen von anorganischen Pigmenten auf der Oberfläche der Leuchtstoffpartikel erfolgt, sondern dass der Leuchtstoff von innen her pigmentiert ist. Somit wird verhindert, dass die Effizienz des Leuchtstoffes herab gesetzt wird, in dem das VUV-Licht von den auf der Oberfläche aufgebrachten Pigmenten absorbiert wird.

Es ist besonders vorteilhaft, dass der Leuchtstoff intrinsisch pigmentiert ist, indem das Wirtsgitter des Leuchtstoffes ein Ion aufweist, welches innerhalb des Wirtsgitter Absorptionsbanden im Wellenlängenbereich der Emission des Leuchtstoffes aufweist.

Durch diese vorteilhafte Ausführung der Pigmentierung erhält der Leuchtstoff eine Eigenfarbe, die seiner Emissionsfarbe entspricht. Dadurch dass die Eigenfarbe des Leuchtstoffes seiner Emissionsfarbe entspricht, zeigt der Leuchtstoff eine hohe Reflexion bei seiner Emissionsfarbe, während die restlichen Spektralanteile weniger stark reflektiert werden. Somit wird verhindert, dass sich das reflektierte Tageslicht mit dem von dem Leuchtstoff emittierten farbigen Licht mischt und so den Kontrast abschwächt.

Es ist ganz besonders vorteilhaft, dass der Leuchtstoff die Zusammensetzung $(Ba_{1-x-y}Sr_x)(Mg_{1-z}Co_z)_oAl_pO_q$:$Eu_y$ mit $0 \leq x < 1$, $0.01 \leq y \leq 0.40$, $0 \leq z < 1$, o = ausgewählt aus der Gruppe 1 und 3, p = ausgewählt aus der Gruppe 10 und 14 sowie q = ausgewählt aus der Gruppe 17 und 23 aufweist.

Diese intrinsisch pigmentierten Leuchtstoffe wandeln effizient VUV-Strahlung in farbiges Licht um.

Weiterhin betrifft die Erfindung einen Leuchtschirm ausgerüstet mit einer Leuchtstoffschicht sowie eine Leuchtstoffzubereitung, die jeweils einen Leuchtstoff enthalten, der intrinsisch pigmentiert ist.

Intrinsisch pigmentierte Leuchtstoffe können besonders vorteilhaft in Leuchtschirmen von optischen Anzeigegeräten verwendet werden, in denen die anregende Strahlung Pigmentteilchen, mit denen eine ähnliche Eigenfarbe des Leuchtstoffes erzielt wird, nicht ohne nennenswerten Energieverlust durchdringen kann.

Desweiteren betrifft die Erfindung einen Leuchtstoff mit der Zusammensetzung $(Ba_{1-x-y}Sr_x)(Mg_{1-z}Co_z)_oAl_pO_q$:$Eu_y$ mit $0 \leq x < 1$, $0.01 \leq y \leq 0.40$, $0 \leq z < 1$, o = ausgewählt aus der Gruppe 1 und 3, p = ausgewählt aus der Gruppe 10 und 14 sowie q = ausgewählt aus der Gruppe 17 und 23.

Im folgenden soll anhand von zwei Figuren und zwei Ausführungsbeispielen die Erfindung näher erläutert werden. Dabei zeigt

Fig. 1    den Aufbau und das Funktionsprinzip einer einzelnen Plasmazelle in einem AC-Plasmabildschirm und

Fig. 2    das Emissions- und Reflexionsspektrum von $Ba_{0.9}(Mg_{0.99}Co_{0.01})Al_{10}O_{17}:Eu_{0.1}$.

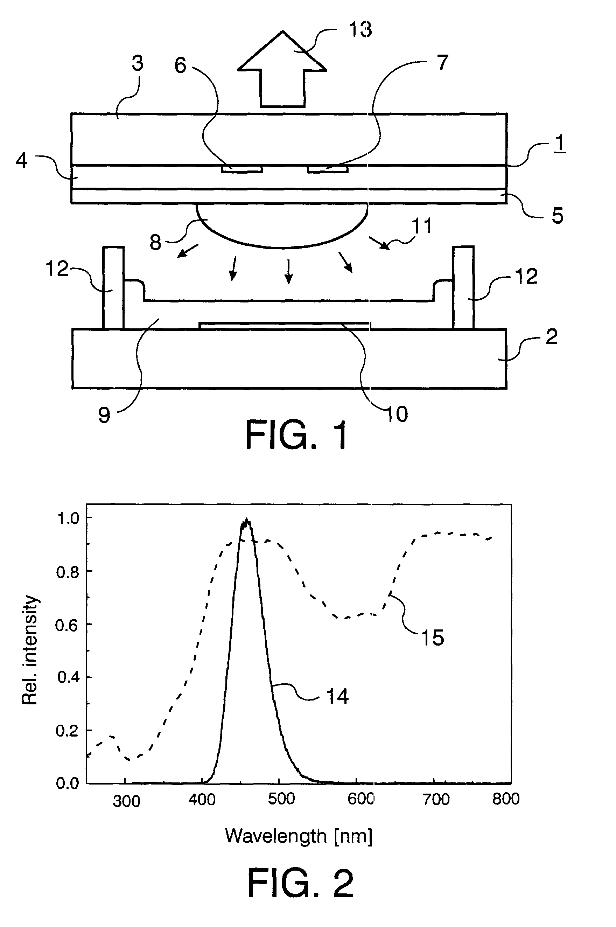

Gemäß Fig. 1 weist eine Plasmazelle eines AC-Plasmabildschirms mit einer koplanaren Anordnung der Elektroden eine Frontplatte 1 und eine Trägerplatte 2 auf. Die Frontplatte 1 enthält eine Glasplatte 3, auf der eine dielektrische Schicht 4 und darauf eine Schutzschicht 5 aufgebracht sind. Die Schutzschicht 5 ist bevorzugt aus MgO und die dielektrische Schicht 4 ist beispielsweise aus PbO-haltigem Glas. Auf die Glasplatte 3 sind parallele, streifenförmige Entladungselektroden 6,7 aufgebracht, die von der dielektrischen Schicht 4 bedeckt sind. Die Entladungselektroden 6,7 sind zum Beispiel aus Metall oder ITO. Die Trägerplatte 2 ist aus Glas und auf der Trägerplatte 2 sind parallele, streifenförmige, senkrecht zu den Entladungselektroden 6,7 verlaufende Adresselektroden 10 aus beispielsweise Ag aufgebracht. Diese sind von einer Leuchtstoffschicht 9, die Licht in einer der drei Grundfarben rot, grün oder blau emittiert, bedeckt. Dazu ist die Leuchtstoffschicht 9 in mehrere Farbsegmente unterteilt. Üblicherweise sind die rot-, grün- bzw. blau-emittierenden Farbsegmente der Leuchtstoffschicht 9 in Form von senkrechten Streifentripeln aufgebracht. Die einzelnen Plasmazellen sind durch eine Rippenstruktur 12 mit Trennrippen aus vorzugsweise dielektrischem Material getrennt.

In der Plasmazelle, als auch zwischen den Entladungselektroden 6,7, von denen jeweils eine im Wechsel als Kathode bzw. Anode wirkt, befindet sich ein Gas, vorzugsweise ein Edelgasgemisch, aus beispielsweise He, Ne oder Kr mit Xe als UV-Licht generierende Komponente. Nach Zündung der Oberflächenentladung, wodurch Ladungen auf einem zwischen den Entladungselektroden 6,7 im Plasmabereich 8 liegenden Entladungsweg fließen können, bildet sich im Plasmabereich 8 ein Plasma, durch das je nach der Zusammensetzung des Gases Strahlung 11 im UV-Bereich, insbesondere im VUV-Bereich, erzeugt wird. Diese Strahlung 11 regt die Leuchtstoffschicht 9 zum Leuchten an, die sichtbares Licht 13 in einer der drei Grundfarben emittiert, das durch die Frontplatte 1 nach außen tritt und somit einen leuchtenden Bildpunkt auf dem Bildschirm darstellt.

Als Leuchtstoffe werden vorzugsweise intrinsisch pigmentierte Leuchtstoffe eingesetzt.

Als blau-emittierender, intrinsisch pigmentierter Leuchtstoff kann beispielsweise $(Ba_{1-x-y}Sr_x)(Mg_{1-z}Co_z)_oAl_pO_q:Eu_y$ mit $0 \leq x < 1$, $0.01 \leq y \leq 0.40$, $0 \leq z < 1$, o = ausgewählt aus der Gruppe 1 und 3, p = ausgewählt aus der Gruppe 10 und 14 sowie q = ausgewählt aus der Gruppe 17 und 23 verwendet werden. Vorzugsweise werden $Ba_{0.9}(Mg_{0.99}Co_{0.01})Al_{10}O_{17}:Eu_{0.1}$ oder $Ba_{0.9}(Mg_{0.99}Co_{0.01})_3Al_{14}O_{23}:Eu_{0.1}$ verwendet.

Ein Leuchtstoff kann beispielsweise intrinsisch pigmentiert werden, in dem sein Wirtsgitter mit einem Ion dotiert wird, welches innerhalb des Wirtsgitter Absorptionsbanden im Wellenlängenbereich der Emission des Leuchtstoffes aufweist.

So besteht zum Beispiel das Wirtsgitter von $BaMgAl_{10}O_{17}:Eu$ aus einer alternierenden Abfolge von BaO-Schichten und $MgAl_2O_4$-haltigen Spinellblöcken. Die $MgAl_2O_4$-haltigen Spinellblöcke weisen eine sehr ähnliche Struktur wie $CoAl_2O_4$ auf und da das $Co^{2+}$-Ion mit 75 pm einen ähnlichen Ionenradius wie das $Mg^{2+}$-Ion (72 pm bei Koordinationszahl von 6) besitzt, können in den Spinellblöcken einige Atomprozent $Mg^{2+}$ durch $Co^{2+}$ ersetzt werden. Da in diesem Kristallgitter das $Co^{2+}$-Ion dieselbe Koordinationssphäre wie in $CoAl_2O_4$ besitzt, ist auch das Kristallfeld und damit die Lage der Absorptionsbanden mit denen von $CoAl_2O_4$ identisch. Somit entspricht die Eigenfarbe dieser mit $Co^{2+}$ intrinsisch pigmentierten Leuchtstoffe der Eigenfarbe eines mit $CoAl_2O_4$ pigmentierten $BaMgAl_{10}O_{17}:Eu$.

Ein grün-emittierender Leuchtstoff mit grüner Eigenfarbe kann hergestellt werden, indem das Wirtsgitter des Leuchtstoffes mit einigen Atomprozent $Pr^{3+}$-Ionen co-dotiert wird. $Pr^{3+}$-Ionen weisen unabhängig vom Wirtsgitter intensive f-f-Absorptionsbanden bei 600 und 450 nm auf. Als grün-emittierender intrinsch pigmentierter Leuchtstoff kann beispielsweise $(Y_{1-x-y-z}Gd_xPr_z)BO_3:Tb_y$ ($0 \leq x \leq 1$, $0.01 \leq y \leq < 0.10$, $0 < z \leq 0.05$) in Plasmabildschirmen verwendet werden.

Zur Herstellung eines intrinsisch pigmentierten Leuchtstoffes werden zunächst die entsprechenden Ausgangsmaterialien wie Metalloxide und/oder anorganische Säuren in den entsprechenden Mengen gemischt. Das Gemisch wird in wasserstoffhaltiger Stickstoffatmosphäre oder CO-Atmosphäre in 2 bis 4 h auf 1000°C bis 1600°C aufgeheizt. Anschließend wird die Mischung 2 bis 4 h in wasserstoffhaltiger Stickstoffatmosphäre oder CO-Atmosphäre bei 1000°C bis 1600°C kalziniert. Die Mischung kann anschließend noch mal mindestens eine weitere Stunde in einer Atmosphäre aus $N_2/H_2$/Wasserdampf bei 1000°C bis 1600°C kalziniert werden. Nach Abkühlung des Gemisches in wasserstoffhaltiger Stickstoffatmosphäre oder CO-Atmosphäre auf Raumtemperatur wird das erhaltene Leuchtstoffpulver gemahlen und gesiebt.

Zur Herstellung einer segmentierten Leuchtstoffschicht 9 wird nach bekannten Verfahren eine Leuchtstoffzubereitung mit einem intrinsisch pigmentierten Leuchtstoff hergestellt und diese mittels Trockenbeschichtungsverfahren, z. B. elektrostatische Abscheidung oder elektrostatisch unterstütztes Bestäuben, als auch mittels Nassbeschichtungsverfahren, z B.

Siebdruck, Dispenserverfahren, bei denen eine Leuchtstoffzubereitung mit einer sich dem Kanälen entlang bewegenden Düse eingebracht wird, oder Sedimentation aus der flüssigen Phase, auf eine Trägerplatte 2 ausgestattet mit einer Rippenstruktur 12 mit Trennrippen und Adresselektroden 10 aufgebracht. Anschließend wird dieses Verfahren für die beiden anderen Farben durchgeführt.

Die fertige Rückplatte 2 wird zusammen mit weiteren Komponenten wie zum Beispiel einer Frontplatte 1 und einem Edelgasgemisch zur Herstellung eines Plasmabildschirms verwendet.

Alternativ können intrinsisch pigmentierte Leuchtstoffe in Farbkathodenstrahlröhren, die mit niedrigen Anodenspannungen arbeiten, wie zum Beispiel Vakuumfluoreszenzdisplays (VFDs) oder Feldemissionsdisplays (FEDs) Anwendung finden.

Ausführungsbeispiel 1

Zur Herstellung von $Ba_{0.9}(Mg_{0.99}Co_{0.01})Al_{10}O_{17}:Eu_{0.1}$ wurden 11.00 g (55.75 mmol) $BaCO_3$, 1.723 g (42.75 mmol) MgO, 1.158 g (18.59 mmol) $MgF_2$, 31.60 g (309.7 mmol) $Al_2O_3$, 982 mg(2.79 mmol) $Eu_2O_3$ und 50 mg(0.21 mmol) $Co_3O_4$ innig vermischt und in einen Korund-Tiegel gefüllt. Unter wasserstoffhaltiger Stickstoffatmosphäre wurde die Mischung in 2.5 h auf 1000°C bis 1600°C aufgeheizt. Anschließend wurde die Mischung 2 bis 4 h in wasserstoffhaltiger Stickstoffatmosphäre bei 1000°C bis 1600°C kalziniert. Anschließend wurde die Mischung eine weitere Stunde in einer Atmosphäre aus $N_2/H_2$/Wasserdampf bei 1000°C bis 1600°C kalziniert. Anschließend wurde das Gemisch in wasserstoffhaltiger Stickstoffatmosphäre auf Raumtemperatur abkühlen lassen. Das erhaltene Leuchtstoffpulver wurde gemahlen und gesiebt. Die Eigenfarbe des Leuchtstoffpulvers war blau.

Der Farbpunkt des so erhaltenen Leuchtstoffes lag bei x = 0.15 und y = 0.04.

In Fig. 2 zeigt Linie 14 das Emissionsspektrum und Linie 15 das Reflexionsspektrum von $Ba_{0.9}(Mg_{0.99}Co_{0.01})Al_{10}O_{17}:Eu_{0.1}$.

Ebenso wie $BaMgAl_{10}O_{17}:Eu$ kristallisiert $Ba_{0.9}(Mg_{0.99}Co_{0.01})Al_{10}O_{17}:Eu_{0.1}$ im hexagonalen Kristallsystem ($\alpha = \beta = 90°$, $\gamma = 120°$).

In Tabelle 1 sind im Vergleich die kristallographischen Daten von $BaMgAl_{10}O_{17}:Eu$ und $Ba_{0.9}(Mg_{0.99}Co_{0.01})Al_{10}O_{17}:Eu_{0.1}$ aufgeführt. Für $Ba_{0.9}(Mg_{0.99}Co_{0.01})Al_{10}O_{17}:Eu_{0.1}$ konnten alle Reflexe indiziert werden.

Tabelle 1:

| Größe der Achsen der Elementarzellen von $BaMgAl_{10}O_{17}:Eu$ und $Ba_{0.9}(Mg_{0.99}Co_{0.01})Al_{10}O_{17}:Eu_{0.1}$ | | |
|---|---|---|
| Elementarzelle | $Ba_{0.9}(Mg_{0.99}Co_{0.01})Al_{10}O_{17}:Eu_{0.1}$ | $BaMgAl_{10}O_{17}:Eu$ |
| a | 5.624(2) | 5.625(2) |
| b | 5.624(2) | 5.625(2) |
| c | 22.625(6) | 22.617(7) |

Ausführungsbeispiel 2

Zur Herstellung von $(Y_{0.4625}Gd_{0.4625}Pr_{0.01})BO_3:Tb_{0.065}$ wurden 10.00 g (44.29 mmol) $Y_2O_3$, 16.05 g (44.29 mmol) $Gd_2O_3$, 326.0 mg (319.2 µmol) $Pr_6O_{11}$, 2.329 g (3.115 mmol) $Tb_4O_7$ und 11.17 g (180.6 mmol) $H_3BO_3$ innig vermischt und in einen Korund-Tiegel gefüllt. Unter CO-Atmosphäre wurde die Mischung in 2.5 h auf 1000°C bis 1400°C aufgeheizt. Anschließend wurde die Mischung 2 bis 4 h in CO-Atmosphäre bei 1000°C bis 1400°C kalziniert. Anschließend wurde das Gemisch in CO-Atmosphäre auf Raumtemperatur abkühlen lassen. Das erhaltene Leuchtstoffpulver wurde gemahlen und gesiebt. Die Eigenfarbe des Leuchtstoffpulvers war grün.

Der Farbpunkt des so erhaltenen Leuchtstoffes lag bei x = 0.134 und y = 0.62.

**Patentansprüche**

1. Plasmabildschirm ausgerüstet mit einer Leuchtstoffschicht (9), die einen Leuchtstoff enthält, der intrinsisch pigmentiert ist.

2. Plasmabildschirm nach Anspruch 2,
   **dadurch gekennzeichnet,**
   **dass** der Leuchtstoff intrinsisch pigmentiert ist, indem das Wirtsgitter des Leuchtstoffes ein Ion aufweist, welches innerhalb des Wirtsgitter Absorptionsbanden im Wellenlängenbereich der Emission des Leuchtstoffes aufweist.

3. Plasmabildschirm nach Anspruch 1,
   **dadurch gekennzeichnet,**
   **dass** der Leuchtstoff die Zusammensetzung $(Ba_{1-x-y}Sr_x)(Mg_{1-z}Co_z)_oAl_pO_q:Eu_y$ mit $0 \leq x < 1$, $0.01 \leq y \leq 0.40$, $0 \leq z < 1$, o = ausgewählt aus der Gruppe 1 und 3, p = ausgewählt aus der Gruppe 10 und 14 sowie q = ausgewählt aus der Gruppe 17 und 23.

4.  Leuchtschirm ausgerüstet mit einer Leuchtstoffschicht, die einen Leuchtstoff enthält, der intrinsisch pigmentiert ist.

5.  Leuchtstoffzubereitung, die einen Leuchtstoff enthält, der intrinsisch pigmentiert ist.

6.  Leuchtstoff mit der Zusammensetzung $(Ba_{1-x-y}Sr_x)(Mg_{1-z}Co_z)_oAl_pO_q$:$Eu_y$ mit $0 \le x < 1$, $0.01 \le y \le 0.40$, $0 \le z < 1$, o = ausgewählt aus der Gruppe 1 und 3, p = ausgewählt aus der Gruppe 10 und 14 sowie q = ausgewählt aus der Gruppe 17 und 23.

FIG. 1

Wavelength [nm]

FIG. 2